(19) Europäisches Patentamt
European Patent Office
Office européen des brevets

(11) Publication number: **0 147 220**
**B1**

(12) **EUROPEAN PATENT SPECIFICATION**

(45) Date of publication of patent specification: **09.03.88**

(51) Int. Cl.[4]: **C 08 K 3/24,** C 08 L 67/02

(21) Application number: **84309050.7**

(22) Date of filing: **21.12.84**

(54) **Flame retardant moulding compositions comprising blends of polyarylate and polyester.**

(30) Priority: **22.12.83 US 564375**

(43) Date of publication of application:
**03.07.85 Bulletin 85/27**

(45) Publication of the grant of the patent:
**09.03.88 Bulletin 88/10**

(84) Designated Contracting States:
**AT BE CH DE FR GB IT LI LU NL SE**

(56) References cited:
**EP-A-0 024 245**
**DE-A-2 051 520**
**DE-A-2 545 568**

(73) Proprietor: **AMOCO CORPORATION**
**200 East Randolph Drive P.O. Box 5910-A**
**Chicago Illinois 60680 (US)**

(72) Inventor: **Robeson, Lloyd Mahlon**
**Route 1, Box 244**
**Whitehouse Station 08889 New Jersey (US)**

(74) Representative: **Cross, Rupert Edward Blount et al**
**BOULT, WADE & TENNANT 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 147 220 B1

**Description**

This invention is directed to a flame retardant moulding composition comprising a blend of a polyarylate, a polyester, and a flame retarding amount of an alkali earth metal antimonate, or mixtures thereof.

Blends of polyarylates and polyesters are known in the art. For example, Japanese patent application no. 54169 describes blends of a polyarylate and polyethylene terephthalate. U.S. Patent 3,946,091 describes blends of an aromatic copolyester and polyethylene terephthalate. Further, U.S. Patent 4,259,458 (corresponding to EP—A—24 245) describes blends of a polyarylate, an aliphatic or cycloaliphatic polyester and select thermoplastic polymers. These blends are suitable in a number of moulding applications, many of which require that the moulded article be flame retardant. U.S. Patent 4,259,458 discloses that flame retardant additives, particularly decabromodiphenyl ether and triarylphosphates such as triphenyl phosphate may be used to flame retard blends of polyarylate, polyester and a thermoplastic polymer.

The use of sodium antimonate as a flame retardant additive for certain synthetic resins is known from DE—A—2 051 520 and DE—A—2 545 568.

Flame retardant systems for many polymers are based on the combination of a halogen source, such as, for example, decabromodiphenyl oxide and antimony trioxide. When a blend of polyarylate and polyester contains a high level of polyester, a halogen source alone will not adequately flame retard the blend so that the antimony trioxide is necessary. However, the use of antimony trioxide in blends of polyarylate and polyester causes thermal degradation of these polymers. Further, the addition of an alkaline earth metal antimonate to polyarylate would result in an unstable product due to the high temperatures (325°C) necessary to process the polyarylate.

Blends of polyarylate and polyester exhibit lower processing temperatures than polyarylate alone. They are amorphous as moulded, and exhibit higher heat distortion temperatures under load than the crystalline, unblended polyesters. Polyesters such as poly(ethylene terephthalate) or poly(butylene terephthalate) are crystalline as moulded and have a low heat distortion temperature, under load.

Therefore, it is unexpected that blends of polyarylate and polyester containing an alkali metal or alkaline earth metal antimonate will be uniquely different than either unblended polyarylate or polyester containing an alkali metal or alkaline earth metal antimonate.

It has now been found that the addition of an alkali metal or alkaline earth metal antimonate, or mixtures thereof, to a blend of a polyarylate and polyester will flame retard the blend and will not degrade the blend when it is processed, at the high temperatures which are needed for processing.

The flame retardant moulding composition of this invention comprises:

(a) An amount of at least 10 weight percent of a polyarylate derived from at least one dihydric phenol and at least one aromatic dicarboxylic acid, and

(b) an amount of at least 10 weight percent of a polyester derived from an aliphatic or cycloaliphatic diol, or mixtures thereof, and at least one aromatic dicarboxylic acid, and is characterised in that the composition also comprises:

(c) an amount of 0.2 to 7.0 weight percent of an alkali metal or alkaline earth metal antimonate, or mixtures thereof.

The composition may additionally include a halogen containing flame retardant.

The alkali or alkaline earth metal antimonates include eg sodium potassium and cesium antimonates. Sodium antimonate is preferred.

The polyarylates of this invention are derived from at leat one dihydric phenol and at least one aromatic dicarboxylic acid.

A particularly desirable dihydric phenol is of the following formula:

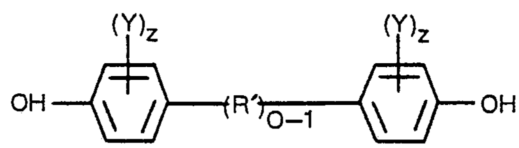

wherein Y is selected from alkyl groups of 1 to 4 carbon atoms, chlorine or bromine, each z, independently, has a value of from 0 to 4, and R′ is a divalent saturated or unsaturated aliphatic hydrocarbon radical, selected from alkylene and alkylidene radicals having from 1 to 3 carbon atoms, and cycloalkylene radicals having up to 9 carbon atoms. The preferred dihydric phenol is bisphenol-A. The dihydric phenols may be used individually or in combination.

This aromatic dicarboxylic acids that may be used in this invention include terephthalic acid, isophthalic acid, any of the naphthalene dicarboxylic acids and mixtures thereof, as well as alkyl substituted homologs of these dicarboxylic acids, wherein the alkyl group contains from 1 to 4 carbon atoms, and acids containing other inert substituents, such as halides, alkyl or aryl ethers, and the like. Preferably, mixtures of isophthalic and terephthalic acids are used. The isophthalic acid to terephthalic acid ratio in the mixture is from 20:8 to 100:0, while the most preferred acid ratio is from 25:75 to 50:50. Also, from 0.5 to 20 percent of aliphatic diacids containing from 2 to about 10 carbon atoms, such as adipic acid, sebacic acid, and the like may be additionally used in the polymerizatioan reaction.

The polyarylates of the present invention can be prepared by any of the well known prior art polyester forming reactions, such as the reaction of the acid chlorides of the aromatic dicarboxylic acids with the dihydric phenols; the reactioon of the diaryl ethers of the aromatic dicarboxylic acids with the dihydric phenols; or the reactioon of the aromatic diacids with diester derivatives of the dihydric phenol. These processes are described in, for example, U.S. Patents 3,317,464; 3,948,856; 3,780,148; 3,824,213 and 3,133,898.

Preferably, the polyarylates used in this invention are prepared by the process described in U.S. Patent 4,321,355.

This patent describes an improved process for preparing a polyarylate having a reduced viscosity of from about 0.5 to greater than 1.0 dl/gm. which process comprises the following steps:

(a) reacting an acid anhydride derived from an acid containing from 2 to 8 carbon atoms with at least one dihydric phenol to form the corresponding diester; and

(b) reacting said diester with at least one aromatic dicarboxylic acid at a temperature sufficient to form the polyarylate, wherein the improvement comprises removing residual acid anhydride, after formation of the dihydric phenol diester, so that its concentration is less than about 1500 parts per million.

The polyarylates herein also include poly(arylate-carbonate). The arylate/carbonate molar ratio can be from 100/0 to 25/75.

The polyesters which are suitable for use herein are derived from an aliphatic or cycloaliphatic diol, or mixtures thereof, containing eg from 2 to 10 carbon atoms and at least one aromatic dicarboxylic acid. The polyesters which are derived from an aliphatic diol and an aromatic dicarboxylic acid have preferably repeating units of the following general formula:

(I) 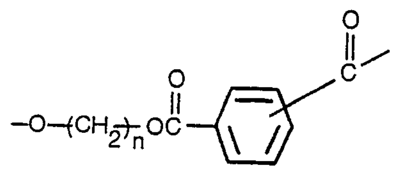

wherein n is an integer of from 2 to 4.

The preferred polyester is poly(ethylene terephthalate).

Also contemplated herein are the above polyesters with minor amounts, e.g., from 0.5 to about 2 percent by weight, of units derived from aliphatic acid and/or aliphatic polyols, to form copolyesters. The aliphatic polyols include glycols, such as poly(ethylene glycol). These can be made following the teachings of, for example, U.S. Patents 2,465,319 and 3,047,539..

The polyesters which are derived from a cycloaliphatic diol and an aromatic dicarboxylic acid are prepared by condensing either the cis- or trans-isomer (or mixtures thereof) of, for example, 1,4-cyclohexanedimethanol with an aromatic dicarboxylic acid so as to produce a polyester having recurring units of the following formula:

(II) 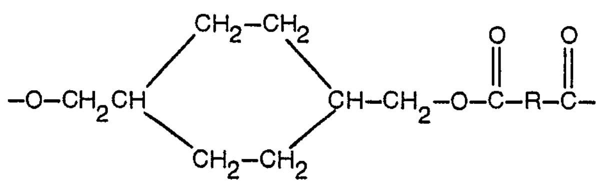

wherein the cyclohexane ring is selected from the cis- and trans-isomers thereof and R represents an aryl radical containing 6 to 20 carbon atoms and which is the decarboxylated residue derived from an aromatic dicarboxylic acid.

Examples of aromatic dicarboxylic acids indicated by R in formula (II), are isophthalic or terephthalic acid, 1,2-di(p-carboxyphenyl)ethane, 4,4'-dicarboxydiphenyl ether, and mixtures of these. All of these acids contain at least one aromatic nucleus. Fused rings can also be present, such as in 1,4- or 1,5-naphthalenedicarboxylic acids. The preferred dicarboxylic acids are terephthalic acid or a mixture of terephthalic and isophthalic acids.

A preferred polyester may be derived from the reaction of either cis- or trans-isomer (or a mixture thereof) of 1,4-cyclohexanedimethanol with a mixture of isophthalic- and terephthalic acids. These polyesters have repeating units of the formula:

(III) 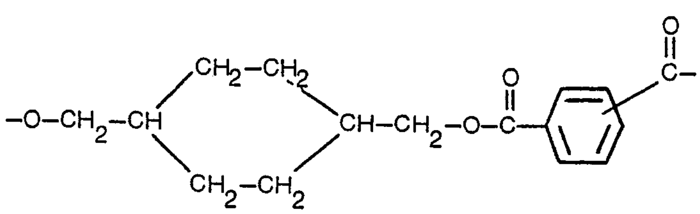

Another preferred polyester is a copolyester derived from cyclohexane dimethanol, an alkylene glycol and an aromatic dicarboxylic acid. These copolyesters are prepared by condensing either the cis- or trans-isomer (or mixtures thereof) of, for example, 1,4-cyclohexanedimethanol and an alkylene glycol with an aromatic dicarboxylic acid so as to produce a copolyester having repeating units of the following formula:

(IV) 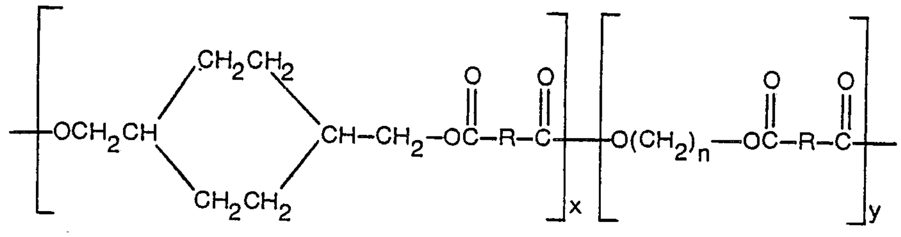

wherein the cyclohexane ring is selected from the cis- and trans- isomers thereof. R is as previously defined, n is an integer of 2 to 4, the x units comprise from 10 to 90 percent by weight and the y units comprise from 10 to 90 percent by weight.

The preferred copolyester may be derived from the reaction of either the cis- or trans-isomer (or mixtures thereof) of 1,4-cyclohexanedimethanol and ethylene glycol with terephthalic acid in a molar ratio of 1:2:3. These copolyesters have repeating units of the following formula:

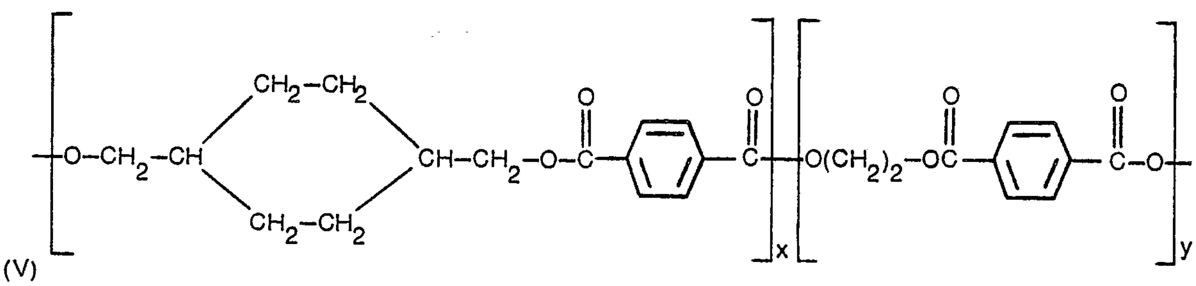

(V)

wherein x and y are as previously defined.

The polyester as described herein are either commercially available or can be produced by methods well known in the art, such as those set forth in, for example, U.S. Patent 2,901,466.

The polyesters used herein have preferably an intrinsic viscosity of from about 0.4 to about 2.0 dl/g. as measured in a 60:40 phenol/tetrachloroethane mixture or similar solvent at 23—30°C.

The compositions of this invention may additionally have admixed therewith a halogen-containing flame retardant additive, preferably in an amount of from 0.01 to about 15 parts per one hundred parts polymer. Representative but not limiting examples of a halogen-containing flame retardant additive include hexabromobenzene, decabromodiphenyl, decachlorodiphenyl, decabromodiphenyl ether, decachlorodiphenyl ether, 2,2-(3,3',5,5'-tetrabromo-4,4'-dihydroxydiphenyl)-propane, 2,2-(3,3',5,5'-tetrachloro-4,4'-dihydroxydiphenyl) propane, brominated polystyrene, tetrabromo bis A polycarbonate, poly(2,6 dibromophenylene oxide) an adduct of cyclohexane and hexachlorocyclopentadiene(chloran), and mixtures thereof.

In the composition of this invention the polyarylate is used in amounts of at least 10, preferably from 20 to 75 weight percent, the polyester in amounts of at least 10, preferably from 25 to 80 weight percent, and the alkali metal antimonate in amounts of from 0.2 to 7.0, preferably from 1 to 5 weight percent.

Other additives may be included in the composition of this invention. These additives include plasticizers: pigments; reinforcing agents, such as glass fibers; thermal stabilizers: ultraviolet light stabilizers, processing aids, impact modifiers and the like. The impact modifiers which are particularly suitable for use herein are described in U.S. Patent 4,231,922. These impact modifiers are a graft copolymer of a vinyl aromatic, an acrylate, an unsaturated nitrile, or mixtures thereof, grafted onto an unsaturated elastomeric backbone and having a tensile modulus (as measured by ASTM D-638, except that the test piece is compression molded to a 508 mm (20 mil) thickness of less than 689,500 kN/$m^2$ (about 100,000 psi), and preferably from 103,400 kN/$m^2$ (15,000 psi) to less than 689,500 kN/$m^2$ (about 100,000 psi).

The unsaturated elastomeric backbone may be polybutadiene poly(butadiene-co-styrene), poly(butadiene-co-acrylonitrile), or poly(isoprene). In each of the polymers there is sufficient butadiene to give the polymer a rubbery character.

The constituents which are grafted onto the unsaturated elastomeric backbone are selected from a vinyl aromatic, such as styrene, α-methylstyrene, alkylstyrene, or mixtures thereof: an acrylate such as the acrylic ester monomers, such as methyl methacrylate, or mixtures thereof; an unsaturated nitrile such as acrylonitrile, methacrylonitrile, or mixtures thereof. It will be understood that the vinyl aromatic, acrylate and acrylonitrile may be used individually or in any combinations in grafting onto the unsaturated elastomeric backbone.

These impact modifiers are free-flowing powders and are commonly available as impact modifiers for poly(vinyl chloride) as described in for example, V. Shakaypal, in "Developments in PVC Technology", edited by J. H. L. Hensen and A. Whelan, Applied Science Publishers Ltd., New York, 1973.

The grafted constituents of the impact modifier comprise from about 20 to about 60 percent by weight of said constituents such that their tensile modulus does not exceed 689,500 kN/m$^2$ (about 100,000 psi), and is preferably, between 103,400 kN/m$^2$ (15,000 psi) to less than 689,500 kN/m$^2$ (about 100,000 psi).

The composition may also include up to 50 weight percent of another polymer compatible with the polyarylate and polyester blend such as a polycarbonate, a styrenic polymer such as ABS, impact poly(methyl methacrylate), a polyamide, such as nylon 6, nylon 6,6, and the like.

The compositions of this invention are prepared by any conventional mixing methods. For example, a preferred method comprises mixing the polyarylate, polyester and sodium antimonate and when used, the halogen source, in powder or granular form in an extruder and extruding the mixture into strands, chopping the strands into pellets and moulding the pellets into the desired article.

## Examples

The following examples serve to give specific illustrations of the practice of this invention but they are not intended in any way to limit the scope of this invention.

### Control A

60 weight percent of a polyarylate (prepared from Bisphenol-A and a mixture of 50 mole percent of terephthalic acid chloride and 50 mole percent of isophthalic acid chloride by conventional methods) having a reduced viscosity of 0.66 dl/g as measured in p-chlorophenol at 49°C, 40 weight percent of a poly(ethylene terephthalate) having an intrinsic viscosity of 0.64 as measured in 60:40 phenol/tetrachloroethane at 23°C were blended in a 25.4 mm (1 inch) laboratory extruder at 275°C.

The pelletized mixtures were tested for melt flow stability at 275°C in a Tinius-Olsen melt index apparatus at 303 kN/m$^2$ (44 psi). The melt flow results demonstrate the melt flow at 275°C (after 10 minutes preheat). The melt flow stability test is determined by the comparison of the melt flow after 10 minutes ($MF_{10}$) compared to the melt flow after 30-minute preheat ($MF_{30}$). The melt flow ratio ($MF_{30}/MF_{10}$) is used as the basis for melt flow stability comparisons.

The results are shown in Table I.

### Control B

98 weight percent of the blend of Control A was blended with 2 weight percent of antimony trioxide by the procedure and under the conditions described in Control A. The blend was tested as described in Control A.

The results are shown in Table I.

### Example 1

98 weight percent of the blend control A was blended with 2 weight percent of sodium antimonate by the procedure and under the conditions described in Control A. The blend was tested as described in Control A.

The results are shown in Table 1.

### Control C

92 weight percent of the blend of Control A was blended with a 6 weight percent of decabromodiphenyl oxide and 2 weight percent of antimony trioxide by the procedure and under the conditions described in Control A. The blend was tested as describedd in Control A.

The results are shown in Table I.

### Example 2

92 weight percent of the blend of Control A was blended with 6 weight percent of decabromodiphenyl oxide and 2 weight percent of sodium antimonate by the procedure and under the conditions described in Control A. The blend was tested as described in Control A.

The results are shown in Table I. The results listed in Table I clearly show that the substitution of sodium antimonate for antimony trioxide yields lower values for $MF_{10}$ melt flow. This demonstrates a lower level of degradation (chain scission) when sodium antimonate is utilized as compared with antimony trioxide. The melt flow ratio ($MF_{30}/MF_{10}$) is also lower for sodium antimonate samples than with corresponding blends with antimony trioxide, also demonstrating improved stability.

TABLE I

| Example | Description of the Ingredients | Composition Wt. % | Melt Flow $MF_{10}$ | Melt Flow Ratio $MF_{30}/MF_{10}$ |
|---|---|---|---|---|
| Control A | PA (60)<br>PET (40) | 100 | 3.8 | 1.1 |
| Control B | PA (60)<br>PET (40)<br>$Sb_2O_3$ | 98<br><br>2 | 14.6 | 2.2 |
| 1 | PA (60)<br>PET (40)<br>Na antimonate | 98<br><br>2 | 8.3 | 1.4 |
| Control C | PA (60)<br>PET (40)<br>DBDPO<br>$Sb_2O_3$ | 92<br><br>6<br>2 | 19.3 | 2.9 |
| 2 | PA (60)<br>PET (40)<br>DBDPO<br>Na antimonate | 92<br><br>6<br>2 | 9.3 | 1.4 |

PA = polyarylate
PET = polyethylene terephthalate
$Sb_2O_3$ = antimony trioxide
DBDPO = decabromodiphenyl oxide

Control D

56.6 weight percent of the polyarylate of Control A was blended with 27.4 weight percent of the polyethylene terphthalate of Control A, 10 weight percent of KM—611 (Registered Trade Mark) (a styrene/acrylate/butadiene terpolymer having a tensile modulus of 319,200 kN/m$^2$ (46,300 psi) and sold by Rohm and Haas Company) and 6 weight percent of decabromodiphenyl oxide by the procedure and under the conditions described in Control A. The blends were then injection moulded in a 35.44 g (1 1/4 ounce) screw injection moulding machine at 275°C into ASTM test bars. The test specimens were measured for the following properties: tensile strength and modulus according to ASTM D—638; elongation at break according to ASTM D—638; notched izod impact strength according to ASTM D—256; heat distortion temperature measured at 1820 kN/m$^2$ (264 psi) on a 3.18 mm (1/8 inch) bar according to ASTM D—648. In addition, the samples were subjected to the UL—94 Burning Test for Classifying Materials. The UL—94 ratings of V—0, V—1, or V—2 are determined as designated below:

"94 V—0" No single flaming combustion after removal of the ignition flame shall exceed 10 seconds and none of the specimens shall drip flaming particles which ignite absorbent surgical cotton placed 305 mm (12 inches) below the specimen. Total flame out time for all five specimens (10 ignitions) cannot exceed 50 seconds.

"94 V—1" No single flame combustion after removal of the igniting flame shall exceed 30 seconds and none of the specimens shall drip flaming particles which ignite absorbent surgical cotton placed 305 mm (12 inches) below the specimen. Total flame out time for all five specimens (10 ignitions) cannot exceed 250 seconds.

"94 V—2" No single flaming combustion after removal of the igniting flame shall exceed 30 seconds. The specimens drip flaming particles which burn only briefly, some of which ignite absorbent surgical cotton 305 mm (12 inches) below the specimen. Total flame out time for all five specimens (10 ignitions) cannot exceed 250 seconds.

Further, the blends were tested for melt flow stability as described in Control A.

The results are shown in Table II.

Control E

55 weight percent of the polyarylate of Control A was blended with 27 weight percent of the polyethylene terephthalate of Control A, 10 weight percent of KM—611 of Control D, 6 weight percent of decabromodiphenyl oxide and 2 weight percent of antimony trioxide by the procedure described in Control A. The blends were moulded into test bars and tested as described in Control D.

The results are shown in Table II.

Example 3

55 weight percent of the polyarylate of Control A was blended with 27 weight percent of the polyethylene terephthalate of Control A, 10 weight percent of KM—611 of Control D, 6 weight percent of decabromodiphenyl oxide and 2 weight percent of sodium antimonate by the procedure described in Control A. The blends were moulded into test bars and tested as described in Control D.

The results are shown in Table II.

TABLE II

| Example | Description of the Composition Ingredients | Wt. % | Tensile Modulus kN/m² (psi) | Tensile Strength kN/m² (psi) | Elongation (%) | Notched Izod Impact Nm/mm of notch (ft-lbs/in of notch) | Heat Distortion Temp. (°C) | Melt Flow $MF_{10}$ | Melt Flow Ratio $MF_{30}/MF_{10}$ | UL—94 Rating |
|---|---|---|---|---|---|---|---|---|---|---|
| Control D | PA | 56.6 | 2,213,000 | 61,230 | 98 | 0.62 | 104 | 2.1 | 1.1 | V—2 |
| | PET | 27.4 | (321,000) | (8,880) | | (11.6) | | | | |
| | KM—611 | 10 | | | | | | | | |
| | DBDPO | 6 | | | | | | | | |
| Control E | PA | 55 | 2,225,000 | 58,950 | 30 | 0.02 | 102 | 7.1 | 3.2 | V—0 |
| | PET | 27 | (327,000) | (8,550) | | (0.4) | | | | |
| | KM—611 | 10 | | | | | | | | |
| | DBDPO | 6 | | | | | | | | |
| | $Sb_2O_3$ | 2 | | | | | | | | |
| 3 | PA | 55 | 2,137,000 | 58,750 | 78 | 0.12 | 103 | 3.6 | 1.5 | V—0 |
| | PET | 27 | (310,000) | (8,520) | | (2.3) | | | | |
| | KM—611 | 10 | | | | | | | | |
| | DBDOP | 6 | | | | | | | | |
| | Na antimonate | 2 | | | | | | | | |

Table II shows that the formulation containing antimony trioxide exhibits a higher melt flow (indicating degradation during processing) and a poorer melt flow stability than the same formulation with Na antimonate or the control formulation without an antimony compound. The Na antimonate based formulation gave an equivalent flame retardant rating as the antimony trioxide based formulation. The mechanical property data shows a severe drop in notched toughness for the antimony trioxide based formulation. A drop in notched toughness also occurs with Na antimonate and is believed due to the loss in toughness with inorganic particulate incorporation. Overall, the property balance of the polyarylate/polyethylene terephthalate formulation based on Na antimonate is superior to that based on antimony trioxide.

**Claims**

1. A flame retardant moulding composition comprising:

(a) at least 10 weight percent of a polyarylate derived from at least one dihydric phenol and at least one aromatic dicarboxylic acid, and

(b) at least 10 weight percent of a polyester derived from an aliphatic or cycloaliphatic diol, or mixtures thereof, and at least one aromatic dicarboxylic acid, characterised in that the composition also comprises:

(c) a amount of 0.2 to 7.0 weight percent of an alkali metal or alkaline earth metal antimonate, or mixtures thereof.

2. A composition as claimed in claim 1 wherein the antimonate is sodium antimonate.

3. A composition as claimed in claim 1 or claim 2 wherein the dihydric phenol is of the formula:

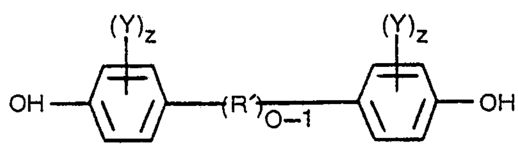

wherein Y is selected from alkyl groups of 1 to 4 carbon atoms, chloride or bromine, each z, independently, has a value of from 0 to 4, and R′ is a divalent saturated or unsaturated aliphatic hydrocarbon radical, selected from alkylene radicals having from 1 to 3 carbon atoms, and cycloalkylene or cycloalkylidene radicals having up to 9 carbon atoms.

4. A composition as claimed in claim 3 wherein each z is O and R′ is an alkylidene radical of 3 carbon atoms.

5. A composition as claimed in any of the preceding claims wherein the aromatic dicarboxylic acid is a mixture of isophthalic and terephthalic acids.

6. A composition as claimed in any of the preceding claims wherein the polyester has repeating units of the general formula:

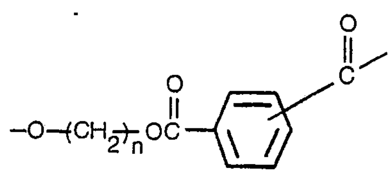

wherein n is an integer of from 2 to 4.

7. A composition as claimed in claim 6 wherein the polyester is poly(ethylene terephthalate).

8. A composition as claimed in any of claims 1 to 5 wherein the polyester has recurring units of the following formula:

(II)

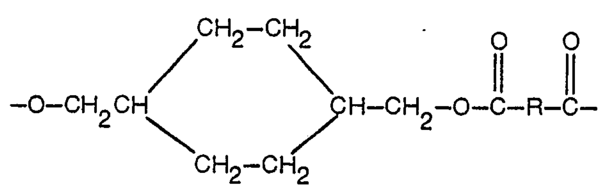

wherein the cyclohexane ring is selected from the cis- and trans-isomer thereof, and R is an aryl radical containing 6 to 20 carbon atoms and which is the decarboxylated residue derived from an aromatic dicarboxylic acid.

9. A composition as claimed in claim 8 wherein the polyester has repeating units of the formula:

(III)

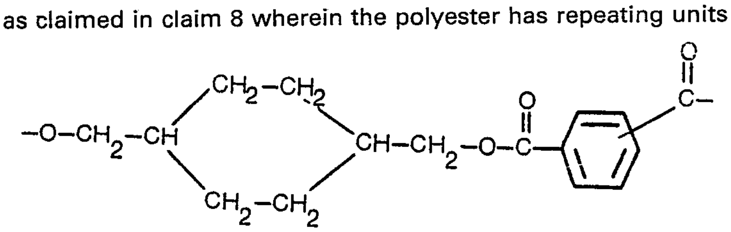

10. A composition as claimed in any of claims 1 to 5 wherein the polyester is a copolyester having repeating units of the following formula:

(IV) 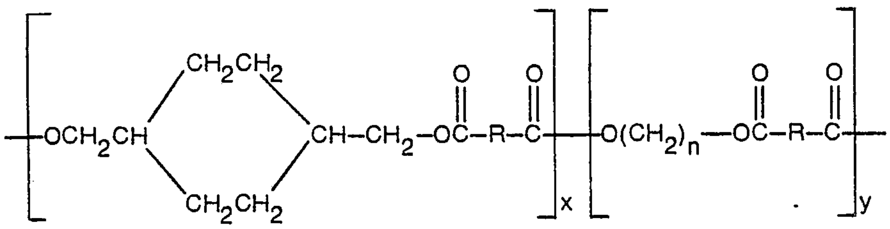

wherein the cyclohexane ring is selected from the cis- and trans- isomers thereof, R is an aryl radical containing 6 to 20 carbon atoms and which is the dicarboxylated residue derived from an aromatic dicarboxylic acid, n is an integer of 2 to 4, x units comprise from 10 to 90 percent by weight and the y units comprise from 10 to 90 percent by weight.

11. A composition as claimed in claim 10 wherein the copolyester has repeating units of the following formula:

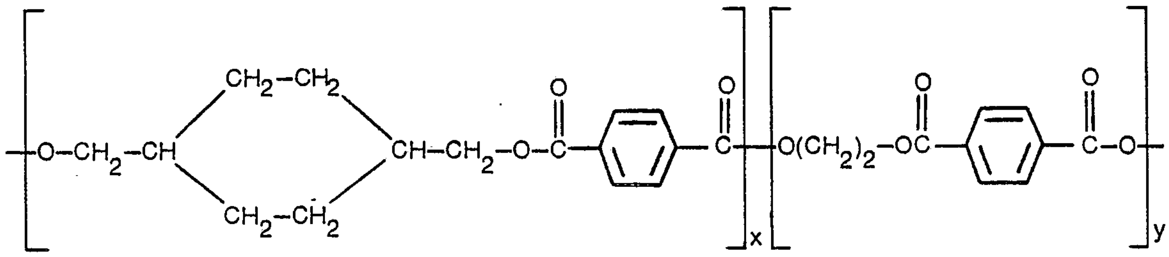

(V)

12. A composition as claimed in any of the preceding claims which contains a halogen containing flame retardant additive.

13. A composition as claimed in claim 12 wherein the flame retardant additive is decabomodiphenyl ether.

14. A composition as claimed in any of the preceding claims which contains an impact modifier which is a graft copolymer of a vinyl aromatic, an acrylate, an unsaturated nitrile, or mixtures thereof, grafted onto an unsaturated elastomeric backbone and having a tensile modulus of less than 689,500 $kN/m^2$ (about 100,000 psi).

15. A composition as claimed in any of the preceding claims wherein the polyarylate is a poly(arylate-carbonate).

16. A composition as claimed in any of the preceding claims which includes up to 50 weight percent of another polymer compatible with the polyarylate and polyester blend.

17. A composition as claimed in claim 16 wherein said other polymer is polycarbonate.

18. A composition as claimed in claim 16 wherein said other polymer is ABS.

19. A composition as claimed in claim 16 wherein said other polymer is impact modified poly(methyl methacrylate).

20. A composition as claimed in claim 16 wherein said other polymer is a polyamide.

21. A composition as claimed in claim 20 wherein said polyamide is nylon 6.

22. A composition as claimed in claim 20 wherein said polyamide is nylon 6,6.

**Patentansprüche**

1. Flammhemmende Formmasse, umfassend:

(a) eine Menge von mindestens 10 Gew.-% eines Polyarylats, das sich von mindestens einem zweiwertigen Phenol und mindestens einer aromatischen Dicarbonsäure ableitet, und

(b) eine Menge von mindestens 10 Gew.-% eines Polyesters, der sich von einem aliphatischen oder cycloaliphatischen Diol oder Mischungen davon und mindestens einer aromatischen Dicarbonsäure ableitet, dadurch gekennzeichnet, daß die Zusammensetzung ebenfalls umfaßt:

(c) eine Menge von 0,2 bis 7,0 Gew.-% eines Alkalimetalloder Erdalkalimetallantimonats oder Mischungen davon.

2. Zusammensetzung nach Anspruch 1, worin das Antimonat Natriumantimonat ist.

3. Zusammensetzung nach Anspruch 1 oder Anspruch 2, worin das zweiwertige Phenol die Formel hat:

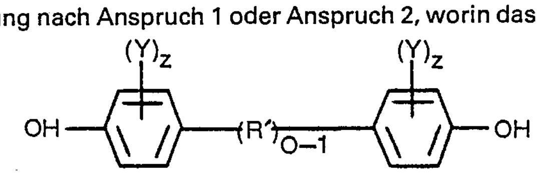

worin Y ausgewählt ist unter Alkylgruppen mit 1 bis 4 Kohlenstoffatomen, Chlor oder Brom, jedes z unabhängig einen Wert von O bis 4 hat und R′ ein zweitwertiger gesättigter oder ungesättigter aliphatischer Kohlenwasserstoffrest ist, ausgewählt unter Alkylenresten mit 1 bis 3 Kohlenstoffatomen und Cycloalkylen- oder Cycloaklidenresten mit bis zu 9 Kohlenstoffatomen.

4. Zusammensetzung nach Anspruch 3, worin jedes z O ist und R′ ein Alkylidenrest mit 3 Kohlenstoffatomen ist.

5. Zusammensetzung nach irgendeinem der vorangehenden Ansprüche, worin die aromatische Dicarbonsäure eine Mischung aus Isophthal- und Terephthalsäure ist.

6. Zusammensetzung nach irgendeinem der vorangehenden Ansprüche, worin der Polyester Struktureinheiten der allgemeinen Formel hat:

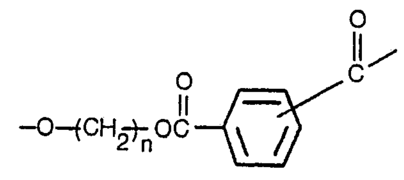

worin n eine ganze Zahl von 2 bis 4 ist.

7. Zusammensetzung nach Anspruch 6, worin der Polyester Poly(ethylenterephthalat) ist.

8. Zusammensetzung nach irgendeinem der Ansprüche 1 bis 5, worin der Polyester Struktureinheiten der folgenden Formel hat:

(II) 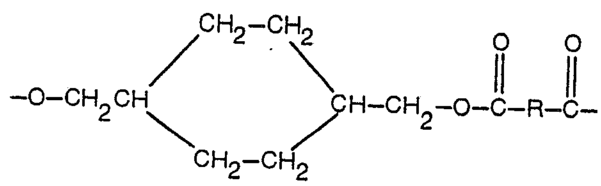

worin der Cyclohexanring ausgewählt ist unter den cis- und trans-Isomeren davon und R ein Arylrest mit 6 bis 20 Kohlenstoffatomen ist, welcher der decarboxylierte Rest, abgeleitet von einer aromatischen Dicarbonsäure ist.

9. Zusammensetzung nach Anspruch 8, worin der Polyester Struktureinheiten der Formel hat:

(III) 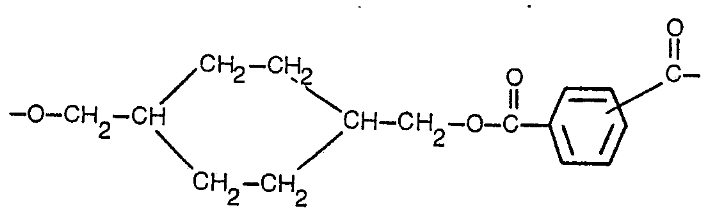

10. Zusammensetzung nach irgendeinem der Ansprüche 1 bis 5, worin der Polyester ein Copolyester mit Struktureinheiten der folgenden Formel ist:

(IV) 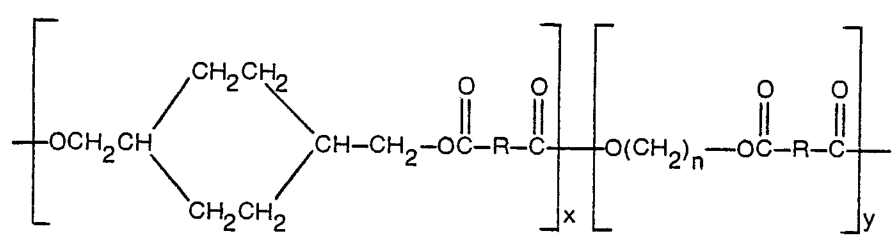

worin der Cyclohexanring ausgewählt ist unter den cis- und trans-Isomeren davon, R ein Arylrest mit 6 bis 20; Kohlenstoffatomen ist, welcher der decarboxylierte Rest, abgeleitet von einer aromatischen Dicarbonsäure ist, n eine ganze Zahl von 2 bis 4, die x-Einheiten 10 bis 90 Gew.-% ausmachen und die y-Einheiten 10 bis 90 Gew.-% ausmachen.

11. Zusammensetzung nach Anspruch 10, worin der Copolyester Struktureinheiten der folgenden Formel hat:

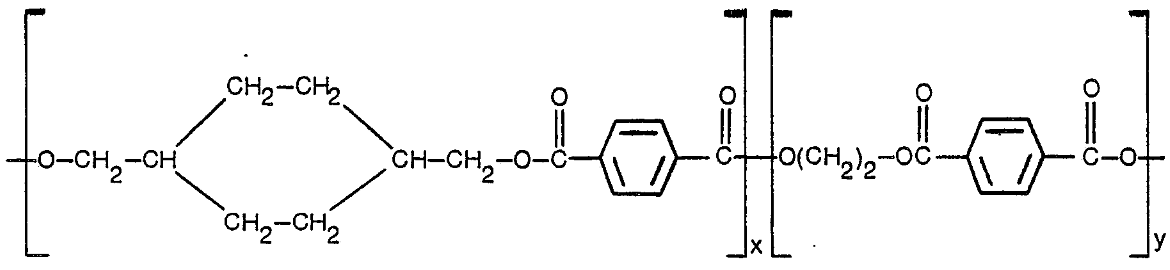

(V)

12. Zusammensetzung nach irgendeinem der vorangehenden Ansprüche, welche ein halogenhaltiges flammhemmendes Additiv enthält.

13. Zusammensetzung nach Anspruch 12, worin das flammhemmende Additiv Decabromdiphenylether ist.

14. Zusammensetzung nach irgendeinem der vorangehenden Ansprüche, welche einen Schlagfestmacher enthält, der ein Pfropfcopolymer einer vinylaromatischen Verbindung, eines Acrylats, eines ungesättigten Nitrils oder von Mischungen davon, aufgepfropft auf die ungesättigte elastomere Grundkette ist und eine Zug-E-Modul von weniger als 698 500 $kN/m^2$ (etwa 100 000 psi) hat.

15. Zusammensetzung nach irgendeinem der vorangehenden Ansprüche, worin das Polyarylat ein Poly(arylat-carbonat) ist.

16. Zusammensetzung nach irgendeinem der vorangehenden Ansprüche, die bis zu 50 Gew.-% eines anderen, mit der Polyarylat-Polyester-Mischung verträglichen Polymers enthält.

17. Zusammensetzung nach Anspruch 16, worin das andere Polymer Polycarbonat ist.

18. Zusammensetzung nach Anspruch 16, worin das andere Polymer ABS ist.

19. Zusammensetzung nach Anspruch 16, worin das andere Polymer schlagfestes Poly(methylmethacrylat) ist.

20. Zusammensetzung nach Anspruch 16, worin das andere Polymer ein Polyamid ist.

21. Zusammensetzung nach Anspruch 20, worin das Polyamid Nylon 6 ist.

22. Zusammensetzung nach Anspruch 20, worin das Polyamid Nylon 6,6 ist.

**Revendications**

1. Composition moulable à combustion retardée, comprenant

(a) une quantité d'au moins 10 % en poids d'un polyarylate dérivé d'au moins un phénol dihydroxylique et d'au moins un acide dicarboxylique aromatique, et

(b) une quantité d'au moins 10 % en poids d'un polyester dérivé d'un diol aliphatique ou cycloaliphatique, ou de leurs mélanges, et au moins un acide dicarboxylique aromatique, caractérisée en ce qu'elle comprend également:

(c) une quantité de 0,2 à 7,0 % en poids d'un antimoniate de métal alcalin ou de métal alcalinoterreux, ou de leurs mélanges.

2. Composition suivant la revendication 1, dans laquelle l'antimoniate est l'antimoniate de sodium.

3. Composition suivant la revendication 1 ou la revendication 2, dans laquelle le phénol dihydroxylique répond à la formule:

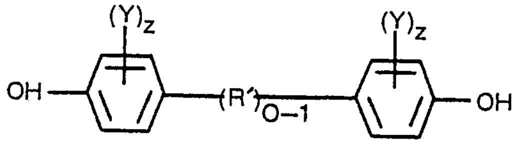

où Y est choisi entre des groupes alkyle de 1 à 4 atomes de carbone, le chlore ou le brome, chaque indice z a indépendamment une valeur de 0 à 4 et R' est un radical hydrocarboné aliphatique saturé ou non saturé divalent, choisi entre des radicaux alkylène ayant 1 à 3 atomes de carbone, et des radicaux cycloalkylène ou cycloalkyidène ayan jusqu'à 9 atomes de carbone.

4. Composition suivant la revendication 3, dans laquelle chaque indice z est égal à O et R' est un radical alkylidène de 3 atomes de carbone.

5. Composition suivant l'une quelconque des revendications précédentes, dans laquelle l'acide dicarboxylique aromatique est un mélange d'acides isophtalique et téréphtalique.

6. Composition suivant l'une quelconque des revendications précédentes, dans laquelle le polyester porte des motifs répétés de formule générale:

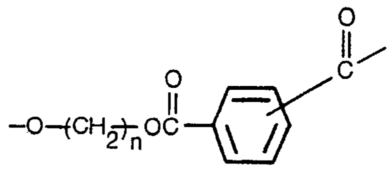

où n est un nombre entier de 2 à 4.

7. Composition suivant la revendication 6, dans laquelle le polyester est un poly(téréphtalate d'éthyléne).

8. Composition suivant l'une quelconque des revendications 1 à 5, dans laquelle le polyester porte des motifs récurrents de formule suivante:

(II) 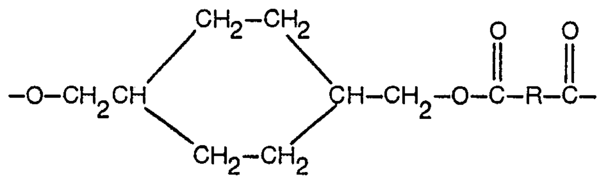

dans laquelle la noyau de cyclohexane est choisi entre ses isomères cis et trans, et R est un radical aryle qui contient 6 à 20 atomes de cabone et qui est le résidue décarboxylé dérivé d'un acide dicarboxylique aromatique.

9. Composition suivant la revendication 8, dans laquelle le polyester porte des motifs répétés de formule:

(III) 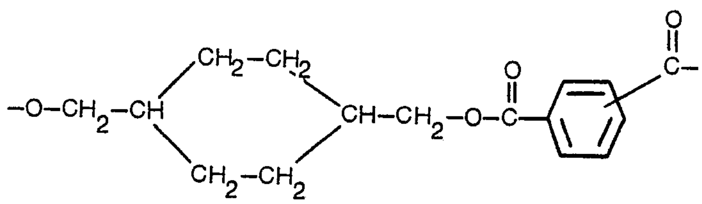

10. Composition suivant l'une quelconque des revendications 1 à 5, dans laquelle le polyester est un copolyester portant des motifs répétés de formule suivante:

(IV) 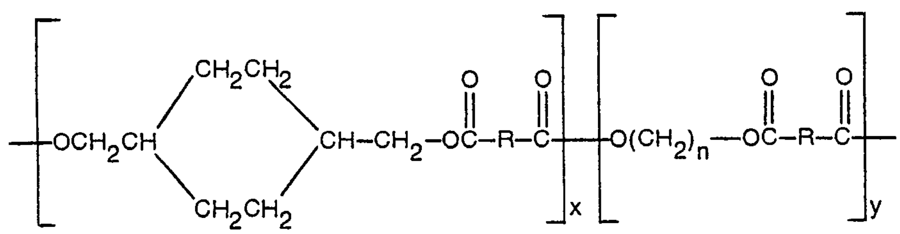

dans laquelle le noyau de cyclohexane est choisi entre ses isomères cis et trans, R est un radical aryle qui contient 6 à 20 atomes de carbone et qui est le résidu dicarboxylé dérivé d'un acide dicarboxylique aromatique, n est un nombre entier de 2 à 4, les motifs x représentent 10 à 90 % en poids et les motifs y représentent 10 à 90 % en poids.

11. Composition suivant la revendication 10, dans laquelle le copolyester porte des motifs répétés de formule suivante:

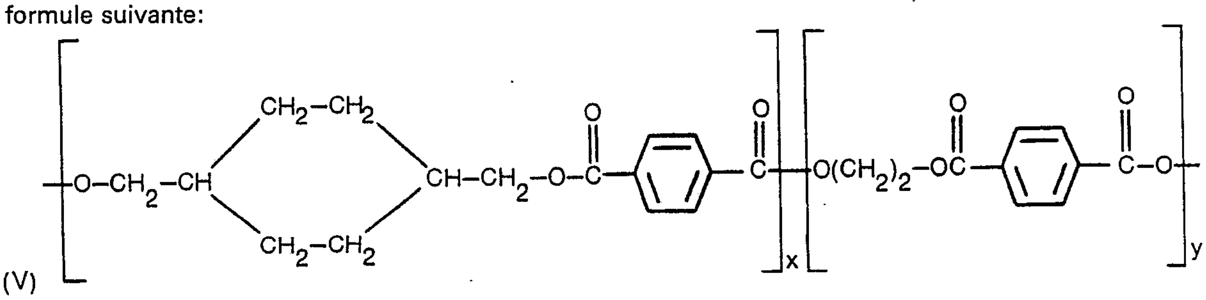

(V)

12. Composition suivant l'une quelconque des revendications précédentes, qui contient un additif retardateur de flamme renfermant un halogène.

13. Composition suivant la revendication 12, dans laquelle l'additif retardateur de flamme est l'ether de décabromodiphényle.

14. Composition suivant l'une quelconque des revendications précédentes, qui contient un modificateur de résistance au choc qui est un copolymère de greffage d'un composé aromatique vinylique, d'un acrylate, d'un nitrile non saturé ou de leurs mélanges, greffés sur un squelette élastomérique non saturé et ayant un module de traction de moins de 689 500 $kN/m^2$ (environ 100 000 $lb/in^2$).

15. Composition suivant l'une quelconque des revendications précédentes, dans laquelle le polyarylate est un poly(arylate-carbonate).

16. Composition suivant l'une quelconque des revendications précédentes, qui comprend jusqu'a 50 % en poids d'un autre polymère compatible avec le mélange de polyarylate et de polyester.

17. Composition suivant la revendication 16, dans laquelle l'autre polymère est un polycarbonate.

18. Composition suivant la revendication 16, dans laquelle l'autre polymère est un polymère ABS.

19. Composition suivant la revendication 16, dans laquelle l'autre polymère est un poly(méthacrylate de méthyle) dont la résistance au choc est modifiée.

20. Composition suivant la revendication 16, dans laquelle l'autre polymère est un polyamide.

21. Coomposition suivant la revendication 20, dans laquelle le polyamide est le "Nylon 6".

22. Composition suivant la revendication 20, dans laquelle le polyamide est le "Nylon 6,6".